# EUROPEAN PATENT SPECIFICATION

(11) **EP 4 605 266 B1**
(45) Date of publication and mention of the grant of the patent: **15.07.2026**
(21) Application number: 23790745.6
(22) Date of filing: 17.10.2023
(51) Int. Cl.: B60N 2/30, B60N 2/20, B60N 2/36

(54) **SLOW-MOTION SEAT**
LANGSAM BEWEGBARER SITZ
SIÈGE À MOUVEMENT LENT

(30) Priority: 19.10.2022 IT 202200021498
(43) Date of publication of application: 27.08.2025
(73) Proprietor: Cultraro Automazione Engineering S.r.l., 10098 Rivoli (Torino) (IT)
(72) Inventor: CULTRARO, Antonino, 10098 RIVOLI (Torino) (IT)
(74) Representative: Vanzini, Christian
(86) International application number: PCT/IB2023/060463
(87) International publication number: WO 2024/084385

(56) References cited:
- EP-A2- 1 034 975
- DE-A1- 102012 221 018

## Description

The present invention refers to seats that are provided with a tilting mechanism, in particular remotely controlled tilting mechanisms.

The rear seats of vehicles may have a backrest that tilts in order to add a loading area to that already provided by the trunk of the vehicle. The backrest is hinged to a seat base, and a spring exerts a force that biases the backrest towards the folded position thereof. Alternatively, the backrest may have such a mass distribution that it is biased towards the folded position by force of gravity. A blocking mechanism is included in order to block the backrest in the raised position. In releasing the blocking mechanism the backrest, due to the action of either the elastic force of the spring or the force of gravity, tilts forwards towards the folded position thereof. Document DE102012221018A1discloses a seat for a vehicle, comprising a seat base, a backrest connected to the seat base through a hinge mechanism, said backrest being tiltable about a rotation axis, between a raised position and a folded position, and being biased towards the folded position, and a damping device mounted on the backrest and configured to slow down a movement of the backrest from the raised position towards the folded position.

In those vehicles provided with a remote control for releasing the blocking mechanism there is a problem regarding the fact that the backrest tilting movement may occur at an excessive velocity, with the consequent generation of noise and possibly the early wear and tear of the system, as well as there being potential risks of damage to goods or persons. One such problem also concerns, albeit to a lesser extent, with those seats that are not provide with a remote control.

One object of the present invention is that of making available a solution that makes it possible to avoid the aforesaid problem, without excessively increasing the weight, complexity or costs of the seat.

In the face of this objective, according to the invention, a vehicle seat is proposed, comprising
a seat base,
a backrest connected to the seat base through a hinge mechanism, said backrest being tiltable about a rotation axis, between a raised position and a folded position, and being biased towards the folded position, and
a damping device mounted on the backrest and configured to slow down a movement of the backrest from the raised position towards the folded position,
wherein the damping device comprises:
   an elongated housing fixed to a frame of the backrest, said housing having a proximal end closer to the hinge mechanism and a distal end farther from the hinge mechanism,
   at least one slider mounted for reciprocal sliding movement within the housing, said slider being arranged close to the distal end of the housing,
   a connecting rod having a distal end connected to the slider and a proximal end eccentrically connected to the hinge mechanism, and
   at least one linear shock-absorber mounted within the housing, said linear shock-absorber comprising a base arranged close to the proximal end of the housing and filled with viscous fluid, a piston movable by reciprocal sliding movement relative to the base, damped by the viscous fluid along a direction of the reciprocal sliding movement towards the proximal end of the housing, and elastic means configured to bias the piston towards the distal end of the housing,
   wherein the slider is separate from the piston and is driven against the piston during a movement of the backrest from the raised position towards the folded position.

Preferred embodiments of the invention are defined in the dependent claims, which are to be understood as an integral part of the present description.

The features and advantages of the seat according to the invention will become apparent from the following detailed description of an embodiment of the invention, made with reference to the accompanying drawings, which are provided for illustrative and non-limiting purposes only, wherein:
- Figure 1 is a perspective view of a seat according to the invention;
- Figure 2 is an enlarged view of a detail of Figure 1;
- Figure 3 is an additional enlarged view of the detail in Figure 2;
- Figure 4 is an exploded view of the damping device of seat of Figures 1-3; and
- Figure 5 is a cross-sectional view of the seat in the folded position.

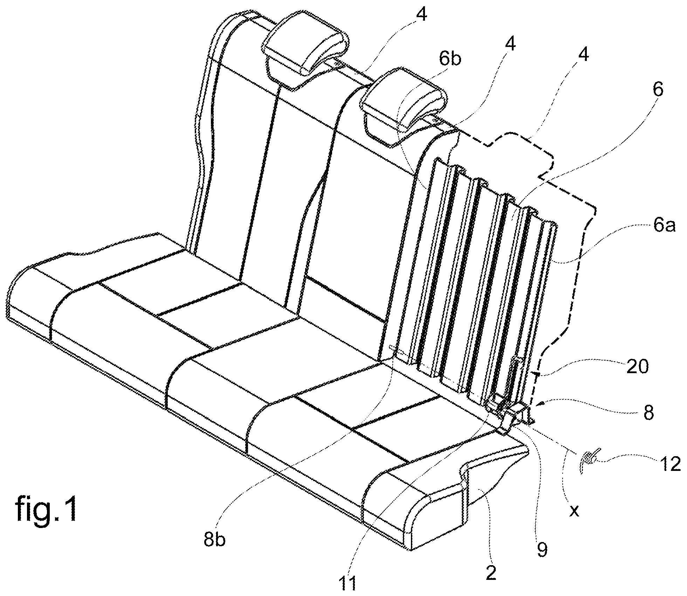

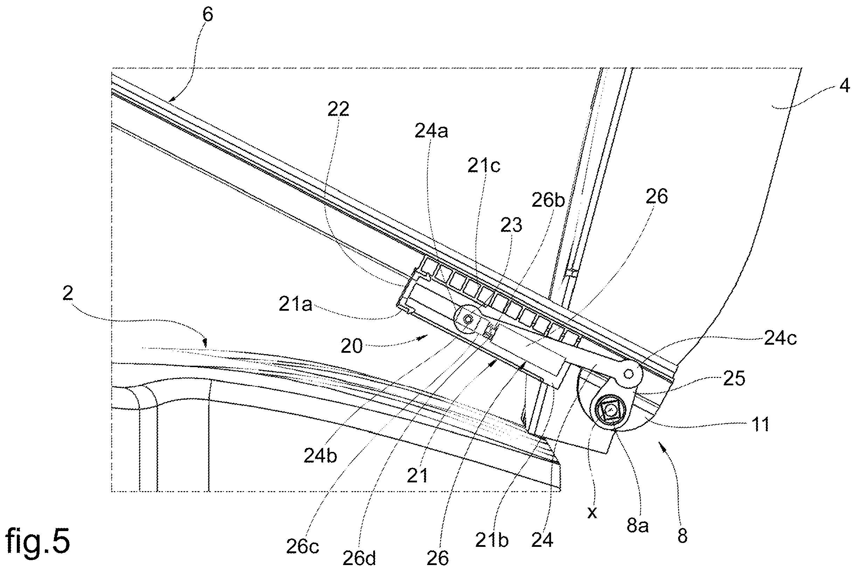

With reference to Figure 1, a seat assembly of a vehicle is shown. The seat assembly comprises a seat base 2 and a backrest 4 tiltable between a raised position, shown in Figure 1, and a folded position, shown in Figure 5. Included in the example shown is a plurality of 4 distinct backrests, tiltable independently of each other. This arrangement is not essential to the purposes of the invention. For the purposes of the present invention, the term "seat base" does not necessarily refer to the bottom of the seat; it instead refers more generically to a support structure whereto the backrest is connected. In other words, the backrest may be directly connected to the bottom of the seat (in which case the bottom coincides with the seat base), or else to a support structure arranged next to the bottom of the seat (in which case the bottom and the seat base are different entities).

When installed into a vehicle, the backrest 4 in the raised position separates the passenger compartment of the vehicle from a trunk (not shown). In the folded position, the backrest 4 is tilted forwards in order to form a loading area that is additional to that already provided by the trunk.

In Figure 1, the backrest 4 shown more to the right is shown with a dashed line in such a way as to display the relative frame thereof, indicated with the numeral 6.

The frame 6 of the backrest is connected to the seat base 2 though a hinge mechanism 8, which in the example shown comprises a pair of pivots 8a, 8b respectively mounted between a first lateral side 6a of the frame 6 and the seat base 2, and between a second lateral side 6b of the frame 6 and the seat base 2. Together with the respective seats, the pivots define the rotation axis x whereabout the backrest 4 is tiltable between the raised position and the folded position.

In the figure only the pivot 8a associated with the first lateral side 6a of the frame 6 is shown, whilst the pivot 8b associated with the second lateral side 6b of the backrest frame 6 is sketched as an outline in Figure 1. In the example shown, the pivot 8a associated with the first lateral side 6a of the frame 6 is supported by a bracket 9 fixed to the seat base 2. The pivot 8a is housed within a tubular seat 11 fixed to the seat frame 6 in order to define the rotation axis x of the backrest. A similar arrangement is provided at the pivot 8b associated with the second lateral side 6b of the frame 6. The specific configuration of the pivots 8a, 8b is not however essential for the purposes of the invention and may be different from that described above.

An elastic organ 12, for example a torsion spring, exerts a force that biases the frame 6 of the backrest to move itself from the raised position to the folded position. In Figure 1 the elastic organ 12, for illustration needs, is shown detached from the seat; it is however to be understood that it is mounted onto the hinge of the backrest frame, in a known manner. According to an alternative embodiment, the seat may lack elastic organs for biasing the backrest. In this case, the backrest has such a mass distribution that the force of gravity biases the backrest to move from the raised position towards the folded position.

A releasable blocking mechanism (not shown) is included for holding the backrest 4 in the raised position. Such blocking mechanism is actionable in order to disengage the backrest 4 and to thus allow it to tilt due to the effect of the force exerted by the elastic organ 12 (or due to the effect of the force of gravity). The blocking mechanism is of a type that is known per sé, for example a blocking mechanism wherein the release thereof is a directly actuated member arranged on the seat, or else a blocking mechanism with a release that is actuated remotely.

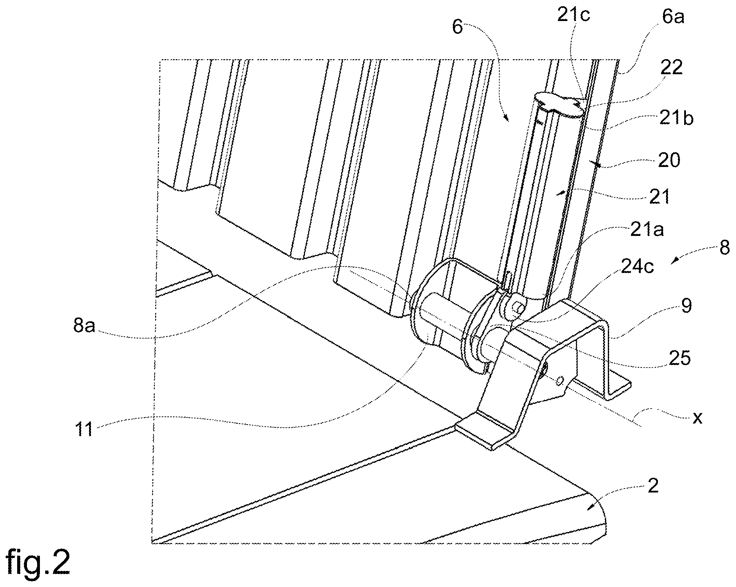

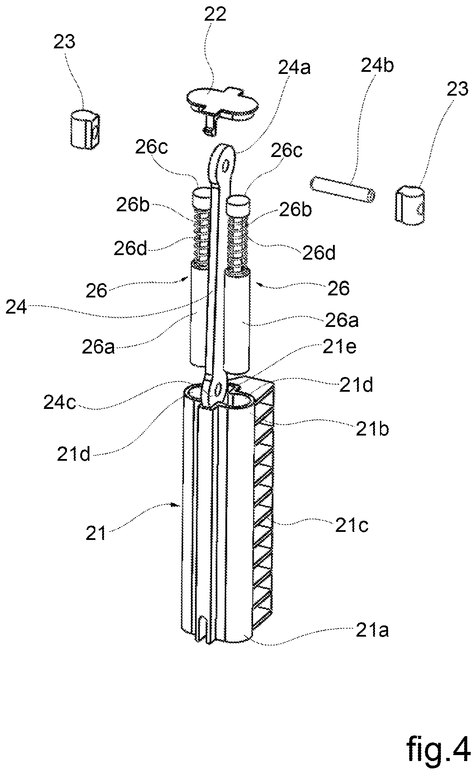

With reference also to Figures 2-4, a damping device 20 is mounted on the backrest 4 and configured to slow down a movement of the backrest 4 from the raised position towards the folded position.

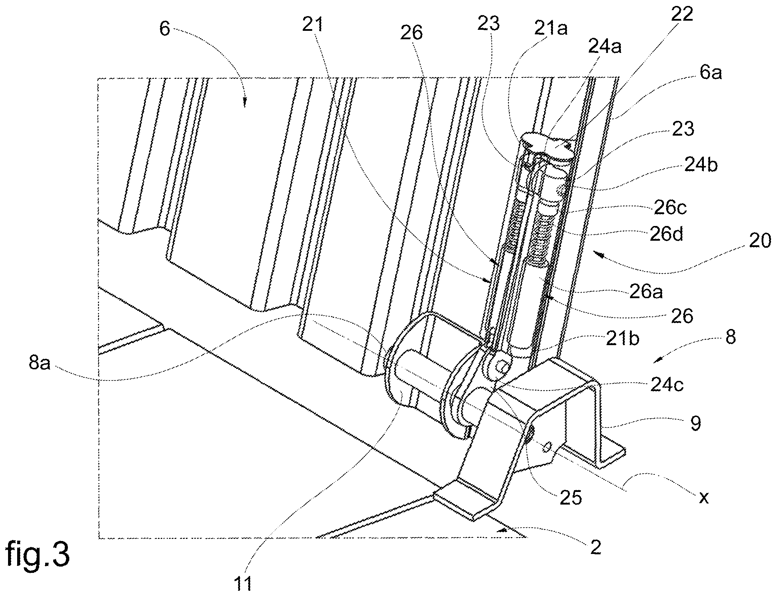

The damping device 20 comprises an elongated housing 21 fixed to the frame 6 of the backrest. In Figures 3 and 5, the housing 21 is shown transparently to display the components of the damping device 20 therewithin. The housing 21 has a proximal end 21a closer to the hinge mechanism 8 and a distal end 21b farther away from the hinge mechanism 8. An anchoring formation 21c is externally formed on the housing 21, whereby the housing 21 is fixed to the frame 6 of the backrest. The distal end 21b of the housing 21 is closed by means of a cap 22.

A cavity is formed within the housing 21, which formed from two cylindrical side seats 21d arranged next to one another, and an intermediate slot interposed between the side seats 21d.

At the end of the distal end 21b of the housing 21, the ends of the side seats 21d and of the intermediate slot 21e are closed by the cap 22. At the proximal end 21a of the housing 21, the ends of the side seats 21d are closed by part of the bottom of the housing 21, whilst the end of the intermediate slot 21e is open.

Two sliders 23 are mounted within the housing 21, more precisely one respective slider 23 for each side seat 21d, for a reciprocal sliding movement within the housing 21. The sliders 23 are arranged close to the distal end 21b of the housing 21.

The damping device 20 furthermore comprises a connecting rod 24, whereby the backrest 4, which rotates relative to the seat base 2, is able to drive the sliders 23 which move with a rectilinear motion within the housing 21. To this end, one distal end 24a is connected to the sliders 23 by means of a pin 24b. The connecting rod 24 is therefore able to rotate relative to the sliders 24, which are arranged on the opposite sides of the connecting rod 24. The connecting rod 24 is also mounted within the housing 21, more precisely within the intermediate slot 21e. The connecting rod 24 protrudes outwardly from an open end of the intermediate slot 21e at the proximal end 21a of the housing 21. One proximal end 24c is eccentrically connected to the hinge mechanism 8, by means of a cranking element that is integral to the pivot 8a.

The damping device 20 furthermore comprises two linear shock-absorbers 26 mounted within the housing 21, more precisely each linear shock-absorber 26 within the respective side seat 21d. The two lateral shock-absorbers are therefore arranged at opposite sides of the connecting rod 24. The linear shock-absorbers 26 are of a type that is known per sé, for example of the type described within the publications WO 2011/045754 A1, EP 3404285 A1 or WO 2012/052934 A1.

Each of the linear shock-absorbers 26 comprises a base 26a arranged (in particular, fixed to the housing 21) close to the proximal end 21a of the housing 21 and filled with viscous fluid, for example oil, and a piston 26b movable by a reciprocal sliding movement relative to the base 26a. The reciprocal sliding movement of the piston 26b is damped by the viscous fluid along a direction of the reciprocal sliding movement towards the proximal end 21a of the housing 21. The end of the piston 26b on the outside of the housing 21 is provided with a head 26c. Interposed between such head 26c and the housing 21 are elastic means 26d, for example a compression spring, configured to bias the piston 26b towards the distal end 21b of the housing 21. The piston 26b, in particular the head 26c thereof, is separate from the slider 23 in the sense that the slider 23 is not fixed to the piston 26b or to the head 26c of the piston, and therefore the slider 23 and the piston 26b, under some circumstances, are able to move themselves relative to the housing 21, in an independent manner therebetween.

When the backrest 4 is rotated from the raised position of Figures 1-3 towards the folded position of Figure 5, the frame 6 rotates relative to the pin 8a, carrying therewith the housing 21 of the damping device 20. The connecting rod 24, eccentrically connected to the hinge 8 by means of the cranking element 25 which is integral to the pin 8a, is driven so as to move itself relative to the housing 10, driving therewith the sliders 23. The sliders 23 therefore move away from a starting position close to the distal end 21b of the housing 21, moving themselves towards the proximal end 21a of the housing 21 up and until engaging with the head 26c of the piston 26. From that point onwards the sliders 23 advance driving therewith the respective pistons 26b, the movement thereof being slowed down by the viscous fluid contained within the bases 26a of the linear shock-absorbers 26, up and until reaching the position shown in Figure 5.

The damping action applied by the linear shock-absorbers 26 does not therefore immediately intervene, but only after a certain angle of rotation of the backrest 4 from the raised position of Figure 1.

The damping device described above has a compact structure, with a length of a few centimeters, and is capable of also operating in the presence of external loads that are relatively elevated, such as those applied by the backrest of the seat during tilting. The configuration with two linear shock-absorbers arranged on opposite sides of the connecting rod is advantageous insofar as, on the one hand, it allows for double the resistance that would be applied by a single linear shock-absorber, and on the other hand it has a symmetrical construction that allows for a load distribution that avoids possible snagging of the damping device. The invention is not by any means limited to the configuration described above, and also contemplates embodiments with a different number of linear shock-absorbers and relative sliders, for example a configuration with only one linear shock-absorber and only one slider.

## Claims

1. Seat for a vehicle, comprising
a seat base (2),
a backrest (4) connected to the seat base (2) through a hinge mechanism (8), said backrest being tiltable about a rotation axis (x), between a raised position and a folded position, and being biased towards the folded position, and
a damping device (20) mounted on the backrest (4) and configured to slow down a movement of the backrest (4) from the raised position towards the folded position,
**characterized in that** the damping device (20) comprises:
an elongated housing (21) fixed to a frame (6) of the backrest, said housing having a proximal end (21a) closer to the hinge mechanism (8) and a distal end (21b) farther from the hinge mechanism (8),
at least one slider (23) mounted within the housing (21) for a reciprocal sliding movement, said slider being arranged close to the distal end (21b) of the housing (21),
a connecting rod (24) having a distal end (24a) connected to the slider (23) and a proximal end (24c) eccentrically connected to the hinge mechanism (8), and
at least one linear shock-absorber (26) mounted within the housing (21), said linear shock-absorber comprising a base (26a) arranged close to the proximal end (21a) of the housing (21) and filled with viscous fluid, a piston (26b) movable by means of a reciprocal sliding movement relative to the base (26a), damped by the viscous fluid along a direction of the reciprocal sliding movement towards the proximal end (21a) of the housing (21), and elastic means (26d) configured to bias the piston (26b) towards the distal end (21b) of the housing (21),
wherein the slider (23) is separate from the piston (26b) and is driven against the piston (26b) during the movement of the backrest (4) from the raised position towards the folded position.

2. Seat according to claim 1, wherein the damping device (20) comprises two sliders (23) and two respective linear shock-absorbers (26) arranged on opposite sides of the connecting rod (24).

3. Seat according to claim 2, wherein the housing (21) comprises two side seats (21d) adapted to receive the two respective linear shock-absorbers (26), and an intermediate slot (21e) interposed between the two side seats (21d) and adapted to receive the connecting rod (24), said connecting rod protruding outwardly from an open end of the intermediate slot (21e) at the proximal end (21a) of the housing (21).

## Patentansprüche

1. Sitz für ein Fahrzeug, umfassend eine Sitzbasis (2), eine Rückenlehne (4), die mit der Sitzbasis (2) durch einen Scharniermechanismus (8) verbunden ist, wobei die Rückenlehne um eine Rotationsachse (x) zwischen einer angehobenen Position und einer umgeklappten Position schwenkbar ist und in Richtung der umgeklappten Position vorgespannt ist, sowie eine Dämpfungsvorrichtung (20), die an der Rückenlehne (4) montiert und dazu ausgelegt ist, eine Bewegung der Rückenlehne (4) von der angehobenen Position zur umgeklappten Position zu verlangsamen,
**dadurch gekennzeichnet, dass** die Dämpfungsvorrichtung (20) umfasst:
ein längliches Gehäuse (21), das an einem Rahmen (6) der Rückenlehne befestigt ist, wobei das Gehäuse ein proximales Ende (21a), das näher am Scharniermechanismus (8) angeordnet ist, und ein distales Ende (21b), das weiter vom Scharniermechanismus (8) entfernt ist, aufweist,
mindestens einen Schieber (23), der innerhalb des Gehäuses (21) für eine hin- und hergehende Gleitbewegung montiert ist, wobei der Schieber nahe dem distalen Ende (21b) des Gehäuses (21) angeordnet ist,
eine Verbindungsstange (24) mit einem distalen Ende (24a), das mit dem Schieber (23) verbunden ist, und einem proximalen Ende (24c), das exzentrisch mit dem Scharniermechanismus (8) verbunden ist, und
mindestens einen linearen Stoßdämpfer (26), der innerhalb des Gehäuses (21) montiert ist, wobei der lineare Stoßdämpfer eine Basis (26a) umfasst, die nahe dem proximalen Ende (21a) des Gehäuses (21) angeordnet und mit viskoser Flüssigkeit gefüllt ist, einen Kolben (26b), der mittels einer hin- und hergehenden Gleitbewegung relativ zur Basis (26a) bewegbar ist, wobei die Bewegung durch die viskose Flüssigkeit entlang einer Richtung der hin- und hergehenden Gleitbewegung zum proximalen Ende (21a) des Gehäuses (21) gedämpft wird, sowie elastische Mittel (26d), die dazu ausgelegt sind, den Kolben (26b) zum distalen Ende (21b) des Gehäuses (21) vorzuspannen,
wobei der Schieber (23) vom Kolben (26b) getrennt ist und während der Bewegung der Rückenlehne (4) von der angehobenen Position zur umgeklappten Position gegen den Kolben (26b) getrieben wird.

2. Sitz nach Anspruch 1, wobei die Dämpfungsvorrichtung (20) zwei Schieber (23) und zwei jeweilige lineare Stoßdämpfer (26) umfasst, die auf gegenüberliegenden Seiten der Verbindungsstange (24) angeordnet sind.

3. Sitz nach Anspruch 2, wobei das Gehäuse (21) zwei seitliche Aufnahmen (21d) umfasst, die dazu ausgelegt sind, die zwei jeweiligen linearen Stoßdämpfer (26) aufzunehmen, sowie einen zwischen den zwei seitlichen Aufnahmen (21d) angeordneten Zwischenschlitz (21e), der dazu ausgelegt ist, die Verbindungsstange (24) aufzunehmen, wobei die Verbindungsstange aus einem offenen Ende des Zwischenschlitzes (21e) am proximalen Ende (21a) des Gehäuses (21) nach außen hervorsteht.

## Revendications

1. Siège pour un véhicule, comprenant
une base de siège (2),
un dossier (4) relié à la base de siège (2) au moyen d'un mécanisme de charnière (8), ledit dossier étant inclinable autour d'un axe de rotation (x), entre une position relevée et une position repliée, et étant sollicité vers la position repliée, et
un dispositif d'amortissement (20) monté sur le dossier (4) et configuré pour ralentir un mouvement du dossier (4) depuis la position relevée vers la position repliée,
**caractérisé en ce que** le dispositif d'amortissement (20) comprend :
un boîtier allongé (21) fixé à un cadre (6) du dossier, ledit boîtier ayant une extrémité proximale (21a) plus proche du mécanisme de charnière (8) et une extrémité distale (21b) plus éloignée du mécanisme de charnière (8),
au moins un coulisseau (23) monté à l'intérieur du boîtier (21) pour un mouvement de coulissement réciproque, ledit coulisseau étant disposé à proximité de l'extrémité distale (21b) du boîtier (21),
une bielle (24) ayant une extrémité distale (24a) reliée au coulisseau (23) et une extrémité proximale (24c) reliée de manière excentrée au mécanisme de charnière (8), et
au moins un amortisseur linéaire (26) monté à l'intérieur du boîtier (21), ledit amortisseur linéaire comprenant une base (26a) disposée à proximité de l'extrémité proximale (21a) du boîtier (21) et remplie de fluide visqueux, un piston (26b) mobile au moyen d'un mouvement de coulissement réciproque par rapport à la base (26a), amorti par le fluide visqueux le long d'une direction du mouvement de coulissement réciproque vers l'extrémité proximale (21a) du boîtier (21), et des moyens élastiques (26d) configurés pour solliciter le piston (26b) vers l'extrémité distale (21b) du boîtier (21),
dans lequel le coulisseau (23) est séparé du piston (26b) et est entraîné contre le piston (26b) pendant le mouvement du dossier (4) depuis la position relevée vers la position repliée.

2. Siège selon la revendication 1, dans lequel le dispositif d'amortissement (20) comprend deux coulisseaux (23) et deux amortisseurs linéaires respectifs (26) disposés sur des côtés opposés de la bielle (24).

3. Siège selon la revendication 2, dans lequel le boîtier (21) comprend deux logements latéraux (21d) adaptés pour recevoir les deux amortisseurs linéaires respectifs (26), et une fente intermédiaire (21e) interposée entre les deux logements latéraux (21d) et adaptée pour recevoir la bielle (24), ladite bielle faisant saillie vers l'extérieur à partir d'une extrémité ouverte de la fente intermédiaire (21e) au niveau de l'extrémité proximale (21a) du boîtier (21).
